# EUROPÄISCHE PATENTSCHRIFT

(11) **EP 1 864 028 B1**
(45) Veröffentlichungstag und Bekanntmachung des Hinweises auf die Patenterteilung: **17.02.2010**
(21) Anmeldenummer: 06722581.3
(22) Anmeldetag: 09.03.2006
(51) Int. Cl.: F16C 43/06

(54) **RADIALWÄLZLAGER, INSBESONDERE EINREIHIGES RILLENKUGELLAGER**
RADIAL ROLLER BEARING, IN PARTICULAR A SINGLE-GROOVE GROOVED BALL BEARING
PALIER A ROULEMENT RADIAL, EN PARTICULIER ROULEMENT A RAINURE A UNE SEULE RANGEE

(30) Priorität: 31.03.2005 DE 102005014556
(43) Veröffentlichungstag der Anmeldung: 12.12.2007
(73) Patentinhaber: Schaeffler KG, 91074 Herzogenaurach (DE)
(72) Erfinder: HOFMANN, Heinrich, 97422 Schweinfurt (DE); DÖPPLING, Horst, 91074 Herzogenaurach (DE); PLANK, Robert, Dr., 91085 Weisendorf (DE)
(86) Internationale Anmeldenummer: PCT/DE2006/000424
(87) Internationale Veröffentlichungsnummer: WO 2006/102863

(56) Entgegenhaltungen:
- DE-A1- 4 334 195
- DE-C- 168 499
- GB-A- 138 386

## Beschreibung

### Gebiet der Erfindung

Die Erfindung betrifft ein Radialwälzlager nach den oberbegriffsbildenden Merkmalen des Patentanspruchs 1, und sie ist insbesondere vorteilhaft an einem einreihigen Rillenkugellager realisierbar, welches beispielsweise als Festlager in einem Kfz-Schaltgetriebe zur Anwendung kommt.

### Hintergrund der Erfindung

Dem Fachmann in der Wälzlagertechnik ist es allgemein bekannt, dass einreihige Rillenkugellager starre, nicht zerlegbare Radialwälzlager sind, die sich vor allem dadurch auszeichnen, dass deren radiale und axiale Tragfähigkeit gleichermaßen hoch ist und dass diese wegen ihrer geringen Reibung die höchsten Drehzahlgrenzen aller Lagerarten aufweisen. Diese Rillenkugellager sind seit langem bekannt und bestehen im Wesentlichen aus einem äußeren Lagerring und einem inneren Lagerring sowie aus einer Anzahl zwischen den Lagerringen angeordneten Kugeln als Wälzkörpern. Dabei sind in die Innenseite des äußeren Lagerrings und in die Außenseite des inneren Lagerrings jeweils rillenförmige Kugellaufbahnen eingearbeitet in denen die Kugeln durch einen Lagerkäfig in gleichmäßigen Abständen zueinander geführt werden. Das Befüllen von Radialkugellagern mit den Kugeln erfolgt dabei durch das mit der DE 168 499 bekannt gewordene Exzentermontageverfahren, bei dem die beiden Lagerringe exzentrisch zueinander angeordnet werden und der dadurch entstehende freie Raum zwischen den Lagerringen mit den Kugeln befüllt wird. Größe und Anzahl der Kugeln sind entsprechend der Lagergröße jeweils so bemessen, dass der innere Lagerring zwischen erster und letzter Kugel unter Ausnutzung der Elastizität beider Lagerringe in die zum äußeren Lagerring konzentrische Stellung gebracht werden kann, so dass die Kugeln abschließend auf dem Teilkreis der beiden Kugellaufbahnen mit gleichmäßigem Abstand zueinander verteilt und der Lagerkäfig eingesetzt werden kann.

In der Praxis hat es sich jedoch erwiesen, dass derartigen Rillenkugellagern aufgrund der geringen maximal einbaubaren Anzahl von Kugeln, die von den Abmessungen des inneren und des äußeren Lagerrings sowie dem Kugeldurchmesser abhängig ist, in Bezug auf die Tragfähigkeit des Lagers dennoch Grenzen gesetzt sind. In der Vergangenheit wurden daher eine Vielzahl von Lösungen vorgeschlagen, mit denen durch eine Erhöhung der Anzahl der Kugeln eine Erhöhung der Tragfähigkeit von Rillenkugellagern erreicht werden sollte.

So wurde es beispielsweise bereits durch die DE 151 483 vorgeschlagen, an einer Seite des Rillenkugellagers in den sich gegenüberliegenden Borden des äußeren und des inneren Lagerrings eine der Form der Kugeln entsprechende Aussparung als Einfüllöffnung anzuordnen, durch welche hindurch die Kugeln ohne Zwischenräume zueinander in das Lager eingefüllt und verteilt werden können. Diese Einfüllöffnung bleibt jedoch in aller Regel unverschlossen und hat demzufolge den Nachteil, dass die Kugeln im Lagerbetrieb immer an dieser Einfüllöffnung vorbeilaufen müssen. Insbesondere bei Rillenkugellagern, bei denen die Einfüllöffnung dann keilförmig in die Laufbahnen der Kugeln einmündet, hat dies jedoch zur Folge, dass es zu einem "Hängen bleiben" oder Verklemmen der Wälzkörper an dieser Einfüllöffnung kommen kann, vor allem dann, wenn Axialkräfte die Kugeln gegen die mit der Einfüllöffnung versehenen Borde des Lagers drücken.

Auch die durch die DE 24 07 477 A1 offenbarte Lösung, die Einfüllöffnung in den Borden der Lagerringe nach dem Befüllen des Wälzlagers mit den Wälzkörpern wieder derart zu verschließen, dass die zuvor über eine gefräste Sollbruchkerbe aus den Borden der Lagerringe herausgebrochenen Verschlussstücke durch Kleben oder Schweißen wieder in die Borde eingesetzt werden, hat sich in der Praxis nicht bewährt, da sich durch das Einkleben oder Verschweißen der Verschlussstücke an der Bordführungsfläche nachteilige Grate oder Klebstoffüberschüsse bilden, durch die es nach wie vor zu einem solchen "Verhaken" der Wälzkörper kommen kann. Darüber hinaus stellt die Verbindungsstelle der Verschlussstücke gegenüber dem restlichen Bord immer eine Schwachstelle in Bezug auf deren Festigkeit dar, so dass derartige Wälzlager zumindest in eine Richtung nur begrenzt axial belastbar sind.

Eine andere Möglichkeit, die Anzahl der Wälzkörper an einem Radialwälzlager zu erhöhen, ist darüber hinaus durch die DE 43 34 195 A1 bekannt geworden. Bei diesem, an sich als einreihiges Rillenkugellager ausgebildeten Radialwälzlager werden die Wälzkörper jedoch nicht durch Kugeln sondern entweder teilweise oder vollständig durch so genannte Kugelscheiben gebildet, die mit zwei symmetrisch von einer Kugelgrundform abgeflachten sowie parallel zueinander angeordneten Seitenflächen ausgebildet sind. Die Breite dieser Kugelscheiben zwischen deren Seitenflächen ist dabei kleiner als der Abstand zwischen der Innenseite des äußeren Lagerrings und Außenseite des inneren Lagerrings ausgebildet, so dass beim Befüllen des Lagers die Kugelscheiben axial zum Lager durch den Abstand zwischen Innenring und Außenring in das Lager eingeführt werden können. Wenn sich der Mittelpunkt der Kugelscheiben dann auf der Höhe der Wälzkörperlaufbahnachse befindet, werden die Kugelscheiben um 90° gedreht, so dass sie mit ihren Kugeloberflächen in den Wälzkörperlaufbahnen abrollen können.

Trotz der Möglichkeit, diese speziell ausgebildeten Kugelscheiben axial in das Lager einzusetzen und das Radialwälzlager damit nahezu vollständig mit einer hohen Anzahl an Wälzkörpern ausfüllen zu können, stellt ein solches Radialwälzlager im Hinblick auf die angestrebte Erhöhung der Tragfähigkeit des Lagers jedoch allenfalls nur einen Kompromiss dar. Dies ist in der Tatsache begründet, dass die Kugelscheiben wegen ihrer axialen Einführbarkeit in das Lager nur entsprechend schmal bzw. mit einer entsprechend kleinen Breite zwischen ihren Seitenflächen ausgebildet werden können, um problemlos durch den Abstand zwischen Innenring und Außenring in das Lager eingeführt werden zu können. Ebenso können die Wälzkörperlaufbahnen in den Lagerringen nur relativ flach und schmal ausgebildet werden, um das Drehen der Wälzkörper in ihre Betriebslage ermöglichen zu können, ohne dass in dieser Betriebslage einzu hohes Radialspiel im gesamten Lager entsteht. Die relativ schmalen Kugelscheiben und die flachen Wälzkörperlaufbahnen bewirken jedoch eine relativ kleine Kontaktfläche der Kugelscheiben zu ihren Wälzkörperlaufbahnen, so dass sich sowohl die axiale als auch die radiale Tragfähigkeit eines solchen Radiallagers wieder verringert und der ursprüngliche Vorteil der erhöhten Anzahl von Wälzkörpern nahezu kompensiert wird.

Aus der GB 138386 ist ein Radialwälzlager bekannt, das dem Oberbegriff des Anspruchs 1 entspricht.

### Aufgabe der Erfindung

Ausgehend von den dargelegten Nachteilen der Lösungen des bekannten Standes der Technik liegt der Erfindung deshalb die Aufgabe zu Grunde, ein Radialwälzlager, insbesondere ein einreihiges Rillenkugellager, zu konzipieren, welches mit Kugelscheiben als Wälzkörper ausgebildet ist und gegenüber herkömmlichen Rillenkugellagern mit Kugeln oder bekannten Radialwälzlagern mit Kugelscheiben eine deutlich erhöhte Tragfähigkeit aufweist.

### Beschreibung der Erfindung

Erfindungsgemäß wird diese Aufgabe durch Anspruch 1 gelöst.

Bei dem Exzentermontageverfahren werden die beiden Lagerringe exzentrisch zueinander angeordnet und in den freien Raum zwischen den Lagerringen werden die Kugelscheiben mit ihren Seitenflächen aneinander anliegend quer in die Wälzkörperlaufbahnen eingelegt. Nach dem Befüllen des Lagers mit den Kugelscheiben wird der innere Lagerring dann unter Ausnutzung der Elastizität beider Lagerringe in die zum äußeren Lagerring konzentrische Stellung gebracht, so dass die Kugelscheiben auf dem Teilkreis der beiden Kugellaufbahnen mit gleichmäßigem Abstand zueinander verteilt und um 90° verschwenkt werden können sowie abschließend der Lagerkäfig in das Lager eingesetzt werden kann.

Bevorzugte Ausgestaltungen und Weiterbildungen des erfindungsgemäß ausgebildeten Radialwälzlagers werden in den Unteransprüchen beschrieben.

Danach ist es gemäß Anspruch 2 bei dem erfindungsgemäß ausgebildeten Radialwälzlager vorgesehen, dass die Breite der Kugelscheiben zwischen ihren Seitenflächen mindestens 70% und der Abstand zwischen der Innenseite des äußeren Lagerrings und der Außenseite des inneren Lagerrings nur etwa 64% des Durchmessers der Kugelgrundform der Kugelscheiben beträgt. Eine Breite der Kugelscheiben von 70 % ihrer Kugelgrundform hat sich in der Praxis hinsichtlich der radialen und axialen Tragfähigkeit des Lagers bewährt und entspricht in etwa der Kontaktfläche, die auch die Kugeln herkömmlicher Rillenkugellager zu ihren Laufbahnen in den Lagerringen aufweisen. Da jedoch nicht nur die Größe der Kontaktfläche sondern auch die Anzahl der Wälzkörper Einfluss auf die Tragfähigkeit des Lagers hat, stellt die Ausbildung der Kugelscheiben mit einer Breite von 70% ihrer Kugelgrundform in dieser Hinsicht ein Optimum dar, da grundsätzlich gilt, je breiter die Kugelscheiben ausgebildet sind, desto größer wird zwar deren Kontaktfläche zu den Wälzkörperlaufbahnen aber desto kleiner wird auch die im Exzentermontageverfahren in das Lager einsetzbare Anzahl der Kugelscheiben. Durch die Ausbildung des Abstandes zwischen der Innenseite des äußeren Lagerrings und der Außenseite des inneren Lagerrings mit nur etwa 64% der Kugelgrundform der Kugelscheiben wird dabei darüber hinaus erreicht, dass die Wälzkörperlaufbahnen der Kugelscheiben in den Lagerringen entsprechend hohe Schultern aufweisen.

Ferner zeichnet sich das erfindungsgemäß ausgebildete Radialwälzlager nach den Ansprüchen 3 und 4 noch durch die Merkmale aus, dass die Tiefe der Wälzkörperlaufbahn am äußeren Lagerring etwa 17% und die Tiefe der Wälzkörperlaufbahn am inneren Lagerring etwa 19% des Durchmessers der Kugelgrundform der Kugelscheiben beträgt, während die Breite der Wälzkörperlaufbahn am äußeren Lagerring etwa 75% und die Breite der Wälzkörperlaufbahn am inneren Lagerring etwa 78% des Durchmessers der Kugelgrundform der Kugelscheiben beträgt. Die Ausbildung der Wälzkörperlaufbahnen mit derartigen Abmessungen entspricht dabei ebenfalls den bei herkömmlichen Rillenkugellagern bewährten Erfahrungswerten und gewährleistet, dass die Kugelscheiben abhängig von der Radiallagerluft auch bei einer zulässigen Schiefstellung des Lagers von 8 bis 16 Winkelminuten aus der Mittellage einen hohen Schmiegungsgrad zu ihren Wälzkörperlaufbahnen aufweisen und das Lager somit die volle Tragfähigkeit behält.

Nach Anspruch 5 ist es schließlich noch ein letztes Merkmal des erfindungsgemäß ausgebildeten Radialwälzlagers, dass die Kontaktfläche jeder Kugelscheibe zu ihren Wälzkörperlaufbahnen im inneren und im äußeren Lagerring insgesamt größer als 45% des Umfangs der Kugelgrundform der Kugelscheiben ist. Eine derart große Kontaktfläche der Kugelscheiben, die als Optimum im Ergebnis aller zuvor genannten Maßnahmen sogar nahezu 50% der Kugelgrundform der Kugelscheiben betragen kann, entspricht wiederum in etwa der Kontaktfläche, die auch die Kugeln herkömmlicher Rillenkugellager zu ihren Laufbahnen aufweisen. Im Vergleich dazu weisen die Kugelscheiben herkömmlicher Radialwälzlager mit Kugelscheiben, die durch axiales Einschieben in den Abstand zwischen dem äußeren und dem inneren Lagerring montiert werden lediglich eine Kontaktfläche zu ihren Wälzkörperlaufbahnen auf, der kleiner als 40% der Kugelgrundform der Kugelscheiben ist.

Das erfindungsgemäß ausgebildete Radialwälzlager weist somit gegenüber den aus dem Stand der Technik bekannten Radialwälzlagern den Vorteil auf, dass es durch die Ausbildung der Kugelscheiben mit einer größeren Breite als der Abstand zwischen dem inneren und dem äußeren Lagerring zum einen große Kontaktflächen zwischen den Kugelscheiben und ihren Laufbahnen in den Lagerringen aufweist und durch das Einsetzen der Kugelscheiben in das Radialwälzlager im Exzentermontageverfahren bei quer in die Laufbahnen eingelegten Kugelscheiben zum anderen zugleich mit einer höheren Anzahl an Wälzkörpern als herkömmliche einreihige Rillenkugellager bestückt werden kann. Dadurch vereint das erfindungsgemäß ausgebildete Radialwälzlager in sich die Vorteile von bekannten Radialwälzlagern mit Kugelscheiben gegenüber herkömmlichen einreihigen Rillenkugellagern, nämlich reduzierter axialer Bauraum, verringertes Gewicht und erhöhte Anzahl an Wälzkörpern, und die Vorteile von herkömmlichen Rillenkugellagern gegenüber bekannten Radialwälzlagern mit Kugelscheiben, nämlich große Kontaktflächen zwischen den Wälzkörpern und ihren Laufbahnen und hohe Axialbelastbarkeit, so dass sich insgesamt eine deutlich erhöhte radiale und axiale Tragfähigkeit des erfindungsgemäßen Radialwälzlagers gegenüber beiden bekannten Lagern ergibt.

### Kurze Beschreibung der Zeichnungen

Eine bevorzugte Ausführungsform des erfindungsgemäß ausgebildeten Radialwälzlagers wird nachfolgend unter Bezugnahme auf die beigefügten Zeichnungen näher erläutert. Im Einzelnen zeigen dabei:
- Figur 1: eine Seitenansicht eines erfindungsgemäß ausgebildeten Ra- dialwälzlagers nach der Montage jedoch ohne Lagerkäfig;
- Figur 2: den Querschnitt A - A nach Figur 1 durch ein erfindungsgemäß ausgebildetes Radialwälzlager;
- Figur 3: eine vergrößerte Darstellung der Einzelheit X des erfindungs- gemäß ausgebildeten Radiallagers gemäß Figur 2;
- Figur 4: eine Seitenansicht des erfindungsgemäß ausgebildeten Radi- alwälzlagers während der Exzentermontage der Kugelscheiben.

### Ausführliche Beschreibung der Zeichnungen

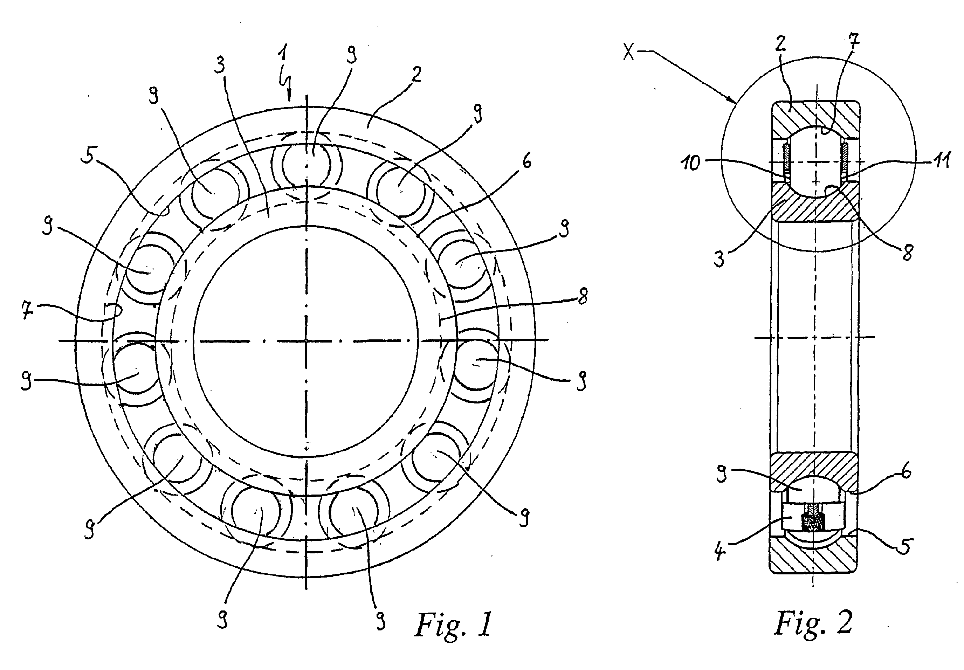

Aus Figur 1 geht deutlich ein als einreihiges Rillenkugellager ausgebildetes Radialwälzlager 1 hervor, welches im Wesentlichen aus einem äußeren Lagerring 2 und einem inneren Lagerring 3 sowie aus einer Anzahl zwischen den Lagerringen 2, 3 angeordneten Wälzkörpern besteht, die durch einen in Figur 2 angedeuteten Lagerkäfig 4 in gleichmäßigen Abständen zueinander geführt werden. In die Innenseite 5 des äußeren Lagerrings 2 und in die Außenseite 6 des inneren Lagerrings 3 sind dabei, wie ebenfalls aus Figur 2 ersichtlich ist, jeweils im Radius den Wälzkörpern angepasste, rillenförmige Wälzkörperlaufbahnen 7, 8 eingearbeitet, während die Wälzkörper deutlich sichtbar als Kugelscheiben 9 mit zwei symmetrisch von einer Kugelgrundform abgeflachten sowie parallel zueinander angeordneten Seitenflächen 10, 11 ausgebildet sind.

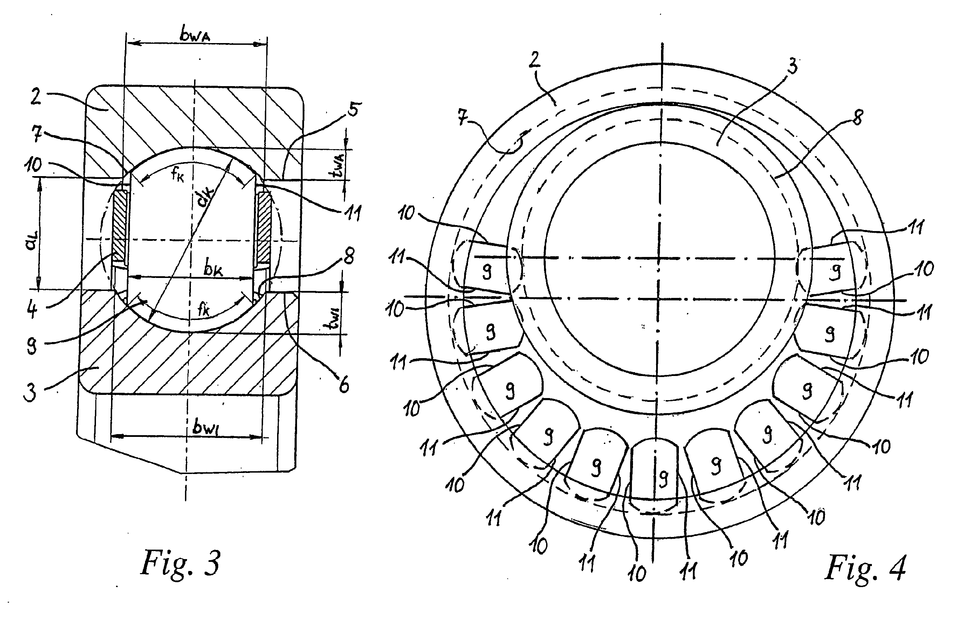

Darüber hinaus ist in den Figuren 1 bis 3 erkennbar, dass das Radialwälzlager 1 zur Erhöhung seiner Tragfähigkeit erfindungsgemäß mit einer gegenüber bekannten Kugelscheiben-Radialwälziagern vergrößerten Kontaktfläche der Kugelscheiben 9 zu ihren Wälzkörperlaufbahnen 7, 8 ausgebildet ist, indem die Breite b_{K} der Kugelscheiben 9 zwischen deren Seitenflächen 10, 11 größer als der Abstand a_{L} zwischen der Innenseite 5 des äußeren Lagerrings 2 und Außenseite 6 des inneren Lagerrings 3 jedoch kleiner als die Breite b_{WI}, b_{WA} der rillenförmigen Wälzkörperlaufbahnen 7, 8 ausgebildet ist. Trotz der dadurch nicht mehr möglichen axialen Montage der Kugelscheiben 9 durch den Abstand zwischen dem äußeren Lagerring 2 und dem inneren Lagerring 3 hindurch weist das Radialwälzlager 1 gleichzeitig zur weiteren Erhöhung seiner Tragfähigkeit auch eine gegenüber bekannten Rillenkugellagern erhöhte Wälzkörperanzahl auf, indem das Einsetzen der Kugelscheiben 9 in das Radialwälzlager 1 erfindungsgemäß mittels dem in Figur 4 dargestellten Exzentermontageverfahren bei quer in die Wälzkörperlaufbahnen 7, 8 eingelegten und mit ihren Seitenflächen 10, 11 aneinander anliegenden Kugelscheiben 9 erfolgt.

Durch Figur 3 wird dabei deutlich, dass die Kugelscheiben 9 zwischen ihren abgeflachten Seitenflächen 10, 11 eine Breite b_{K} aufweisen, die etwa 70% des Durchmessers d_{K} der in der Zeichnung strichpunktiert dargestellten Kugelgrundform der Kugelscheiben 9 entspricht. Der Abstand a_{L} zwischen der Innenseite 5 des äußeren Lagerrings 2 und der Außenseite 6 des inneren Lagerrings 3 beträgt dagegen nur etwa 64% des Durchmessers d_{K} der Kugelgrundform der Kugelscheiben 9, so dass die Wälzkörperlaufbahnen 7, 8 der Kugelscheiben 9 in den Lagerringen 2, 3 mit herkömmlichen Rillenkugellager vergleichbare hohe Schultern aufweisen.

Des Weiteren geht aus Figur 3 zumindest andeutungsweise hervor, dass zu Realisierung einer Wälzkörperkontaktfläche, die auch die Kugeln herkömmlicher Rillenkugellager zu ihren Laufbahnen in den Lagerringen aufweisen, die Tiefe t_{WA} der Wälzkörperlaufbahn 7 in der Innenseite 5 des äußeren Lagerrings 2 etwa 17% der Kugelgrundform der Kugelscheiben 9 beträgt, während die Tiefe t_{W1} der Wälzkörperlaufbahn 8 in der Außenseite 6 des inneren Lagerrings 3 mit etwa 19% des Durchmessers d_{K} der Kugelgrundform der Kugelscheiben 9 bemessen ist. Die Breite b_{WA} der Wälzkörperlaufbahn 7 in der Innenseite 5 des äußeren Lagerrings 2 beträgt somit etwa 75% des Durchmessers d_{K} der Kugelgrundform der Kugelscheiben 9, während die Breite b_{WI} der Wälzkörperlaufbahn 8 in der Außenseite 6 des inneren Lagerrings 3 mit etwa 78% des Durchmessers d_{K} der Kugelgrundform der Kugelscheiben 9 bemessen ist. Dadurch ergibt sich eine in Figur 3 mit f_{K} bezeichnete Kontaktfläche der Kugelscheiben 9 zu ihren Wälzkörperlaufbahnen 7, 8 in der Innenseite 5 des äußeren Lagerrings 2 und in der Außenseite 6 des inneren Lagerrings 3, die insgesamt nahezu 50% des Umfangs der Kugelgrundform der Kugelscheiben 9 beträgt.

### Bezugszahlenliste

- 1: Radialwälzlager
- 2: äußerer Lagerring
- 3: innerer Lagerring
- 4: Lagerkäfig
- 5: Innenseite von 2
- 6: Außenseite von 3
- 7: Wälzkörperlaufbahn in 5
- 8: Wälzkörperlaufbahn in 6
- 9: Kugelscheiben
- 10: Seitenflächen von 9
- 11: Seitenflächen von 9
- b_{K}: Breite der Kugelscheiben
- a_{L}: Abstand der Lagerringe
- b_{WA}: Breite der Wälzkörperlaufbahn in 2
- b_{WI}: Breite der Wälzkörperlaufbahn in 3
- d_{K}: Durchmesser der Kugelgrundform von 9
- t_{WA}: Tiefe der Wälzkörperlaufbahn in 2
- t_{WI}: Tiefe der Wälzkörperlaufbahn in 3
- f_{K}: Kontaktfläche der Kugelscheiben

## Patentansprüche

1. Radialwälzlager, insbesondere einreihiges Rillenkugellager, welches im Wesentlichen aus einem äußeren Lagerring (2) und einem inneren Lagerring (3) sowie aus einer Anzahl zwischen den Lagerringen (2, 3) angeordneten Wälzkörpern besteht, wobei in die Innenseite (5) des äußeren Lagerrings (2) und in die Außenseite (6) des inneren Lagerrings (3) jeweils rillenförmige Wälzkörperlaufbahnen (7, 8) eingearbeitet und die Wälzkörper als Kugelscheiben (9) mit zwei symmetrisch von einer Kugelgrundform abgeflachten sowie parallel zueinander angeordneten Seitenflächen (10, 11) ausgebildet sind, wobei die Breite (b_{K}) der kugelscheiben (9) zwischen deren Seitenflächen (10, 11) gleichgroß oder kleiner als die Breite (b_{WI}, b_{WA}) der rillenförmigen Wälzkörperlaufbahnen (7, 8) ausgebildet ist und das Einsetzen der Kugelscheiben (9) in das Radialwälzlager (1) im Exzentermontageverfahren bei quer in die Wälzkörperlaufbahnen (7, 8) eingelegten und mit ihren Seitenflächen (10, 11) aneinander anliegenden Kugelscheiben (9) erfolgt, **dadurch gekennzeichnet, dass** die Wälzkörper durch einen Lagerkäfig (4) in gleichmäßigen Abständen zueinander geführt werden, und dass das Radialwälzlager (1) sowohl eine vergrößerte Kontaktfläche der Kugelscheiben (9) zu ihren Wälzkörperlaufbahnen (7, 8) als auch eine erhöhte Wälzkörperanzahl aufweist, indem die Breite (b_{K}) der Kugelscheiben (9) zwischen deren Seitenflächen (10, 11) größer als der Abstand (a_{L}) zwischen der Innenseite (5) des äußeren Lagerrings (2) und Außenseite (6) des inneren Lagerrings (3) ist.

2. Radialwälzlager nach Anspruch 1, **dadurch gekennzeichnet, dass** die Breite (b_{K}) der Kugelscheiben (9) zwischen ihren Seitenflächen (10, 11) mindestens 70% und der Abstand (a_{L}) zwischen der Innenseite (5) des äußeren Lagerrings (2) und der Außenseite (6) des inneren Lagerrings (3) nur etwa 64% des Durchmessers (d_{K}) der Kugelgrundform der Kugelscheiben (9) beträgt.

3. Radialwälzlager nach Anspruch 2, **dadurch gekennzeichnet, dass** die Tiefe (t_{WA}) der Wälzkörperlaufbahn (7) in der Innenseite (5) des äußeren Lagerrings (2) etwa 17% und die Tiefe (t_{WI}) der Wälzkörperlaufbahn (8) in der Außenseite (6) des inneren Lagerrings (3) etwa 19% des Durchmessers (d_{K}) der Kugelgrundform der Kugelscheiben (9) beträgt.

4. Radialwälzlager nach Anspruch 3, **dadurch gekennzeichnet, dass** die Breite (b_{WA}) der Wälzkörperlaufbahn (7) in der Innenseite (5) des äußeren Lagerrings (2) etwa 75% und die Breite (b_{WI}) der Wälzkörperlaufbahn (8) in der Außenseite (6) des inneren Lagerrings (3) etwa 78% des Durchmessers (d_{K}) der Kugelgrundform der Kugelscheiben (9) beträgt.

5. Radialwälzlager nach Anspruch 4, **dadurch gekennzeichnet, dass** die Kontaktfläche (f_{K}) der Kugelscheiben (9) zu ihren Wälzkörperlaufbahnen (7, 8) in der Innenseite (5) des äußeren Lagerrings (2) und in der Außenseite (6) des inneren Lagerrings (3) insgesamt jeweils größer als 45 % des Umfangs der Kugelgrundform der Kugelscheiben (9) ist.

## Claims

1. Radial rolling bearing, in particular single-row grooved ball bearing, which consists essentially of an outer bearing ring (2) and of an inner bearing ring (3) and also of a number of rolling bodies which are arranged between the bearing rings (2, 3), **characterized in that** the rolling bodies in each case groove-shaped rolling body raceways (7, 8) being worked into the inside (5) of the outer bearing ring (2) and into the outside (6) of the inner bearing ring (3), and the rolling bodies being designed as spherical disks (9) with two side faces (10, 11) flattened symmetrically from a basic spherical shape and arranged parallel to one another, the width (b_{K}) of the spherical disks (9) between their side faces (10, 11) being designed to be equal to or smaller than the width (b_{WI}, b_{WA}) of the groove-shaped rolling body raceways (7, 8), and the insertion of the spherical disks (9) into the radial rolling bearing (1) taking place by the eccentric mounting method, with the spherical disks (9) being introduced transversely into the rolling body raceways (7, 8) and bearing with their side faces (10, 11) against one another, are guided at uniform distances from one another by means of a bearing cage (4), and **in that** the radial rolling bearing (1) has both an enlarged contact area of the spherical disks (9) with their rolling body raceways (7, 8) and an increased number of rolling bodies, by virtue of the width (b_{K}) of the spherical disks (9) between their side faces (10, 11) being greater than the distance (a_{L}) between the inside (5) of the outer bearing ring (2) and the outside (6) of the inner bearing ring (3).

2. Radial rolling bearing according to claim 1, **characterized in that** the width (b_{K}) of the spherical disks (9) between their side faces (10, 11) amounts to at least 70% and the distance (a_{L}) between the inside (5) of the outer bearing ring (2) and the outside (6) of the inner bearing ring (3) to only about 64% of the diameter (d_{K}) of the basic spherical shape of the spherical disks (9).

3. Radial rolling bearing according to claim 2, **characterized** that the depth (t_{WA}) of the rolling body raceway (7) in the inside (5) of the outer bearing ring (2) amounts to about 17% and the depth (t_{WI}) of the rolling body raceway (8) in the outside (6) of the inner bearing ring (3) to about 19% of the diameter (d_{K}) of the basic spherical shape of the spherical disks (9).

4. Radial rolling bearing according to claim 3, **characterized in that** the width (b_{WA}) of the rolling body raceway (7) in the inside (5) of the outer bearing ring (2) amounts to about 75% and the width (b_{WI}) of the rolling body raceway (8) in the outside (6) of the inner bearing ring (3) to about 78% of the diameter (d_{K}) of the basic spherical shape of the spherical disks (9).

5. Radial rolling bearing according to claim 4, **characterized in that** the contact area (f_{K}) of the spherical disks (9) with their rolling body raceways (7, 8) in the inside (5) of the outer bearing ring (2) and in the outside (6) of the inner bearing ring (3) is overall in each case greater than 45% of the circumference of the basic spherical shape of the spherical disks (9).

## Revendications

1. Palier à roulement radial, en particulier roulement à rainure à bille à une seule rangée, qui se compose d'une bague de palier extérieure (2) et d'une bague de palier intérieure (3) ainsi que d'un certain nombre de corps de roulement disposés entre les bagues de palier (2, 3), des pistes de roulement (7, 8) pour les corps de roulement étant pratiquées dans le côté intérieur (5) de la bague de palier extérieure (2) et dans le côté extérieur (6) de la bague de palier intérieure (3) et les corps de roulement étant réalisés sous forme de rondelles (9) avec deux surfaces latérales (10, 11) aplaties symétriquement à partir d'une forme sphérique de base et disposées parallèlement l'une à l'autre, la largeur (b_{K}) des rondelles (9) entre leurs surfaces latérales (10, 11) étant identique ou inférieure à la largeur (b_{WI}, b_{WA}) des pistes de roulement (7, 8) en forme de rainures pour les corps de roulement, et l'insertion des rondelles (9) dans le palier à roulement radial (1) s'effectuant dans un procédé de montage excentré lorsque les rondelles (9) sont insérées transversalement dans les pistes de roulement (7, 8) pour les corps de roulement et s'appliquent l'une contre l'autre avec leurs surfaces latérales (10, 11), **caractérisé en ce que** les corps de roulement sont guidés de manière équidistante les uns des autres à travers une cage de palier (4) et **en ce que** le palier à roulement radial (1) présente à la fois une surface de contact agrandie des rondelles (9) par rapport à leurs pistes de roulement (7, 8) pour les corps de roulement, ainsi qu'un nombre plus élevé de corps de roulement, **en ce que** la largeur (b_{K}) des rondelles (9) entre leurs surfaces latérales (10, 11) est supérieure à la distance (a_{L}) entre le côté intérieur (5) de la bague de palier extérieure (2) et le côté extérieur (6) de la bague de palier intérieure (3).

2. Palier à roulement radial selon la revendication 1, **caractérisé en ce que** la largeur (b_{K}) des rondelles (9) entre leurs surfaces latérales (10, 11) vaut au moins 70% et la distance (a_{L}) entre le côté intérieur (5) de la bague de palier extérieure (2) et le côté extérieur (6) de la bague de palier intérieure (3) ne vaut qu'environ 64% du diamètre (d_{K}) de la forme sphérique de base des rondelles (9).

3. Palier à roulement radial selon la revendication 2, **caractérisé en ce que** la profondeur (t_{WA}) de la piste de roulement (7) pour les corps de roulement dans le côté intérieur (5) de la bague de palier extérieure (2) vaut approximativement 17% et la profondeur (t_{WI}) de la piste de roulement (8) pour les corps de roulement dans le côté extérieur (6) de la bague de roulement intérieure (3) vaut approximativement 19% du diamètre (d_{K}) de la forme sphérique de base des rondelles (9).

4. Palier à roulement radial selon la revendication 3, **caractérisé en ce que** la largeur (b_{WA}) de la piste de roulement (7) pour les corps de roulement dans le côté intérieur (5) de la bague de palier extérieure (2) vaut approximativement 75% et la largeur (b_{WI}) de la piste de roulement (8) pour les corps de roulement dans le côté extérieur (6) de la bague de roulement intérieure (3) vaut approximativement 78% du diamètre (d_{K}) de la forme sphérique de base des rondelles (9).

5. Palier à roulement radial selon la revendication 4, **caractérisé en ce que** la surface de contact (f_{K}) des rondelles (9) par rapport à leurs pistes de roulement (7, 8) pour les corps de roulement dans le côté intérieur (5) de la bague de palier extérieure (2) et dans le côté extérieur (6) de la bague de palier intérieure (3) est dans l'ensemble à chaque fois supérieure à 45 % de la périphérie de la forme sphérique de base des rondelles (9).
